# EUROPEAN PATENT APPLICATION

(11) **EP 0 798 653 A2**
(43) Date of publication of application: **01.10.1997**
(21) Application number: 97105380.6
(22) Date of filing: 01.04.1997
(51) Int. Cl.: G06F 17/30

(54) **Method for retrieving an element of an image over a network**

(30) Priority: 29.03.1996 US 625496
(71) Applicant: Iota Industries Ltd., 69710 Tel Aviv (IL)
(72) Inventor: Stern, Yonatan, Tel Aviv (IL)
(74) Representative: Modiano, Guido, Dr.-Ing.

(57) **Abstract**

A process for retrieving graphic elements contained in a larger graphic image is disclosed. According to exemplary embodiments of the present invention, an enhanced file format expedites the retrieval process. According to other embodiments of the present invention, the retrieval process includes a search operation. An enhanced search operation according to the present invention, is expedited by the enhanced file format.

## Description

### FIELD AND BACKGROUND OF THE INVENTION

The present invention relates to document retrieval over networks, and more particularly, to retrieving relevant portions, or sections, of documents of any type, particularly images and scanned documents including faxes.

With the Information Revolution currently underway, more and more information is being made available to more and more individuals. Information is generally not stored locally on each individual terminal, but rather, information is stored centrally, and using information technology, particularly computer networks, information is transmitted from the central location to the individual terminal.

This setup of accessing central databases for information makes it essential for the user to have the ability to search a remote database in order to access relevant information. Various forms of search engines have thus been constructed to facilitate searches for particular information. Searches generally identify key words, and then search for the appearance of those words in a database. Because binary files are read for content by the search engine, their contents can be selectively retrieved. This means that only relevant portions of documents contained in the database are retrieved.

The ability to perform a remote search through a database and retrieve only relevant portions of files has a number of important benefits. First, the document can be searched without having to first transmit the document over the network to the local terminal. This is particularly important when dealing with large databases. It is even more crucial when dealing with slow transmission rates because of the prohibitively large amount of time necessary to transmit the data before searching. Second, once an item of relevant data is located, only the portion of the file containing the relevant item of data is transmitted. This saves a great deal of time and resources which would have otherwise been necessary to transfer the entire file.

Presently, such searching ability is afforded only with binary files containing texts. However, image files presently cannot be searched and retrieved in the same manner. It would therefore be highly advantageous to have image files identified in the same manner. This would include identifying the content of the image files in a manner compatible with a remote search, and identifying the various portions of the image file. This second feature would enable retrieving only relevant portions of an image file rather than the entire file.

It is thus a well established fact that the major problem facing users of large databases is receiving a wealth of superfluous information. It is also an established fact that the longest part of a search is the preview stage. This is because presently, preview requires retrieving entire image files, and then viewing them in search of the desired images. Thus, the preview stage is particularly problematic, particularly when dealing with slow transmission rates (such as over the Internet), because it involves transmitting much data which, ultimately is superfluous.

An arrangement for image files comparable to the one in use regarding text files is presently non existent because the information contained in image files such as scanned images and faxes is stored as a entity rather than as individual units of identifiable information.

At present, one common format for storing image files is the Tagged Image Format (TIF). The content of files in the TIF format can be interpreted today using Optical Character Recognition (OCR) technology. OCR technology enables recognizing, as text, the letters contained in an image. It is then possible to search the image for particular words, etc. However, OCR technology does not enable identifying the parts of the image file containing a relevant item of data. Therefore, the entire file must be transmitted in order for even only a portion of it to be viewed. This is a serious concern when dealing with slow transmission rates, such as are common over the Internet. Also for this reason, OCR is inefficient for searching large documents. The alternative of dividing a large document into smaller files is costly. Yet a further consequence of the limitation on present OCR technology is that it has no value regarding complex diagrams and documents such as, for example, newspaper pages. Because conventional OCR technology cannot distinguish elements within an image, using OCR on a scanned newspaper page would produce the words as they appear across the page, without distinguishing between articles appearing side by side on the page.

A farther restriction of OCR technology is its high error rate. Thus a large number of mistakes are generated by the faulty identification of letters (and thus, words) by OCR technology. It would be highly beneficial to have a method of searching files translated by OCR, or a similar method, while being assured of a much higher success rate in finding all occasions of the word, or words, searched for.

Additionally, OCR technology does not enable identifying a picture image. Therefore, in order to search a picture image database for a particular picture element, entire files will first have to be transmitted to the individual terminal and searched by viewing each image. The cost for such an operation in time and difficulty make it necessary that a method for searching, similar to that enabled by OCR for texts, be created for searching picture files for items of interest.

### SUMMARY OF THE INVENTION

The present invention is of a process for retrieving a specific image from a graphic database wherein the image retrieved is an element of a digital image. Particularly, the present invention involves retrieving an element of a digital image which is contained in a file, and the element being made up of at least one pixel but forming less than the entire file. The process is made up of:
(a) mapping of the element in the digital image, automatically or manually;
(b) accessing the element within the file containing the digital image; and,
(c) selecting the element.

According to further features in preferred embodiments of the invention described below, the file containing the digital image is stored in the database in compressed form.

According to further features in preferred embodiments of the invention, the element being retrieved is compressed prior to its being retrieved over the network.

According to yet further features in preferred embodiments of the invention, the file containing the image is in the Searchable Image Format (SIF). This format, described in detail below, combines information related to the image together with the image data.

According to further features in preferred embodiments of the invention, the graphic elements are searched for in a database. The search is facilitated by information related to the graphic element. According to a preferred embodiment, this information is contained together with the image data in the same file.

According to still further features in preferred embodiments of the invention, the search is conducted using the Advanced Probability Pattern Search (APPS). This method, described below, searches text contained in the image which was not recognized correctly by the OCR technology. The method utilizes error information generated by the OCR technology in its attempt at recognizing those characters which, ultimately, OCR was not able to recognize. The method searches for possible matches for an entire word pattern, and results in a vast improvement over existing retrieval technologies.

According to further features in preferred embodiments of the invention, a process of linking graphic elements to one another is provided.

### BRIEF DESCRIPTION OF THE DRAWINGS

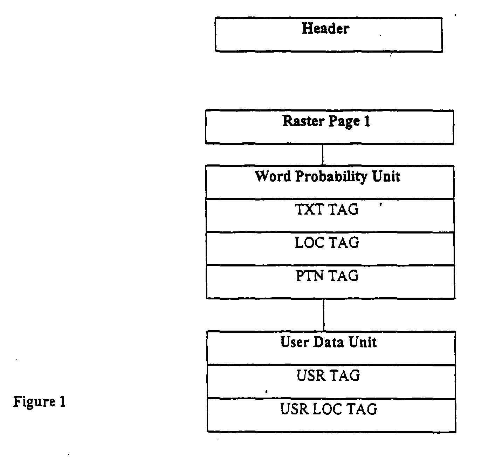

Figure 1 is a block diagram illustrating the SIF file format.

### DESCRIPTION OF THE PREFERRED EMBODIMENTS

The present invention is of a process for retrieving a specific image from a graphic database wherein the image retrieved is an element of a digital image. Particularly, the present invention involves retrieving an element of a digital image which is contained in a file, and the element being made up of at least one pixel but forming less than the entire file.

The principles and operation of the present invention may be better understood with reference to the drawings and the accompanying description.

The basic operation of the method according to the present invention involves two steps: (a) providing information describing an element contained in an image file, and the location within the image file of that element.
(b) retrieving the selected element over a computer network.

According to a preferred embodiment, the files stored in the database are compressed files. Accordingly, the information file of step (a) is first decompressed, and then before it is transmitted over the network (step (c)), it is compressed again. The compressed element of the image file is transmitted, ad then decompressed again at the client terminal in order to be viewed.

According to another preferred embodiment, the file format of the image files is a new format called Searchable Image Format (SIF). SIF files are entirely compatible with TIF files. The major difference being that SIF files incorporate information data which had been stored, according to U.S. Patent Application 08/318,044, in a separate text file. This separate text file is known as an RCT file. According to the SIF configuration, the graphic elements, the content information and the location within the image file of the various elements, are combined in one file called the SIF file. Thus the SIF file format enhances data management by obviating the need for linking an image file to a second file containing the content of the image and the location within the image file of the various image elements.

SIF files are made up of multiple layers of data. These include:
(a) a header section;
(b) the digital image, contained in the conventional raster format;
(c) information relating to individual words or elements of the image file;
(d) administrative information relating to the elements within the image.

The header (a) contains administrative information related to the file, such as the image resolution, the file name, and other general information about the file. In addition, because TIF files (and therefore, SIF files too) support multiple page files, the SIF file header also includes the number of pages in the file.

Information (c) relating to individual words or elements of the image file, includes the text of the word, the error probability pattern, a visual description of the word and the geometrical shape of the word image. It further includes binary information enabling locating the word in its geometric location within the larger image. It is important to note that each of these items of information is independent. Therefore, while the text of the word may not be clear, the word image can still be located exactly within the larger image.

Administrative information (d) features administrative and general information relating to elements within the larger graphic image. This information typically includes the element name and the date of the last update, as well as graphic information such as special markings of the elements. For example, in an image of a newspaper page, administrative information relating to specific articles on the page, such as the title and the graphic location and shape of the article on the page, would typically be included in this category.

As mentioned, the SIF file format is compatible with the TIF format. Thus, the various additional layers of information are embedded within the standard TIF format. Structurally, the information can be viewed as two groups: raster image data; and additional SIF data. The raster image data are stored in the same manner as in a conventional TIF file. Conventional TIF files feature the capacity for inserting tags to the raster data. SIF file structure uses this feature of the conventional TIF format for embedding the additional SIF data. Thus, the additional SIF data are embedded as tags to the raster image data. This makes SIF files completely compatible with the TIF format.

Figure 1 illustrates the SIF file structure using the conventional TIF file format. Administrative information is stored in the Header section. Raster image data is stored in a second section. According to a preferred embodiment the raster data is compressed using CCITT G4 compression. The additional SIF information is made up of two units: the Word Probability unit for locating text within the image; and the User Data unit for locating elements within the image, such as entire articles within a newspaper page.

The Word Probability unit is made up of the texts contained in the image; the geometrical location and shape of the texts within the image; and the characters which the OCR technology did not identify .The text contained in the image is contained in the TXT TAG. Geometrical information relating to the location of words in the image is contained in the LOC TAG. "Word patterns," which include information regarding words not identified by the OCR technology are contained in the PTN TAG. This last category of information enables an enhance search for words within the image. This enhanced search is able to search for words not identified by the OCR technology which may match the search word. This feature is explained below.

The User Data unit is made up of two parts. The first is the geometrical location of the graphic element within the image. This is contained in the USR LOC TAG. The second is general information relating to the graphic element, such as the article title in the example mentioned above. This is contained in the USR TAG.

The various layers of information making up the SIF file are linked to each other by a plurality of pointers. Thus, for example, geometrical location of a word, contained in the LOC TAG, is linked to the geometrical location of the article it is featured in (USR LOC TAG). Similarly, the words of a graphic element, such as a newspaper article, contained in the USR TAG are linked to the corresponding words contained in the TXT TAG.

According to a preferred embodiment, the USR TAG is made up of pointers to the texts included in the TXT TAG.

According to another embodiment, the USR TAG is made up of pointers to corresponding textual information in the Word Probability Unit, including the TXT TAG and the PTN TAG.

According to another embodiment, the search utilizes an advanced algorithm for searching text identified using OCR technology. This advanced algorithm is called Adaptive Probability Pattern Search (APPS). In order to understand APPS, it is beneficial to first understand the error correction method used in conventional OCR technology.

In conventional OCR technology, a number of errors in character recognition are generated by the technology failing to identify some of the characters. Traditionally there have been two approaches to overcoming this problem. One approach is to attempt to figure out what the missing letters must be by matching the entire word to other words contained in a dictionary. This method falls short in a number of areas. First, it is highly inaccurate, because often (certainly when a word is missing more than one letter), the possibilities for the missing letters are many, and only one attempt is accepted as the correct word.

Another approach is conducting a fuzzy search. This involves searching for a word using only a few of the letters. This method is inadequate for two reasons. First, it searches the text file generated by the OCR, and therefore uses only the letter combinations in that file, which were generated by the first method, and a such are not accurate. Second, this method turns up a multitude of unrelated data because it searches for words similar to the target word.

APPS, on the other hand, makes use of the SIF file format. The SIF file format retains the information generated by the OCR technology regarding unidentified characters and probable errors. Thus the SIF file does not impose an assumed character for one which was not clearly identified but retains all of the identification information regarding that character. When a search is performed, the word patterns containing unidentified characters, or characters with a high error probability are checked to see if they could possibly match the target word pattern. In this manner, the probability of locating relevant information on image-based documents is increased by up to 80% over prior art search methods using OCR technology, and particularly, text files.

As mentioned above, the, SIF file contains information relating to the geometrical position of the graphic element within the graphic file. Therefore, once the search has located relevant elements, it can easily compress those elements and transmit them over a network.

An example of an improved search is presently described:
(a) a compressed file is searched for text or particular graphic elements;
(b) the file is decompressed on the remote server;
(c) the text or graphic elements of the file are selected;
(d) a portion of the image surrounding the selected text or graphic element is copied from the source file;
(e) the selected portion is compressed;
(f) the compressed selection is transmitted to the client terminal for viewing;
(g) the selected portion is decompressed at the client terminal and is viewed by the client.
Such a configuration enables the client to quickly scan the results of a search and ultimately receive the entire sought after image or any part of it.

A modem database philosophy regarding retrieving data from a database is known as "client/server." When particular records are retrieved from a central database, the selection process involves multiple queries for selecting data based on a number of criteria. Traditionally, the entire database would be downloaded to the client location, and the client would then perform the queries. According to "client/server" philosophy, it is preferable for certain queries to be performed at the central "server" location. This affords having less data to transmit to the client. Until now, this philosophy applied only in text based databases, because image files could not be searched, and portions of image files could not be selected. However, according to the present invention, this philosophy may be applied to an image database too.

The SIF file format enables linking graphic elements within a document, and elements within various files in a database. According to one embodiment, the linking process is performed by attaching fixed tags to the SIF file linking various elements to other elements. According to another embodiment, the linking is constructed dynamically as a search is performed, linking related elements together. According to this second embodiment, the links are virtual links, rather than fixed links. Virtual links have important advantages over fixed links, because they can generate a link by any criteria, yet they don't take up the physical storage space necessary for storing the multitude of links. This is particularly useful when a client wants to link a transmitted file to a local file located at the client site. The linking information does not need to be transmitted, but rather can be constructed anew at the client site. This saves transmission time ad resources. The process of dynamic linking also permits the user to change the structure of a database (such as editing, adding, and moving items of information within the database) without upsetting the linking structure.

Dynamic linking also saves time in when identifying linked elements. For example, if all references to Benjamin Franklin were linked to a particular image of the Declaration of Independence, a newly added reference of Benjamin Franklin, when selected would automatically point to the image of the Declaration of Independence, without having to set up the link to the new reference first. This saves time and resources identifying all linked elements (references to Benjamin Franklin, in the example above) to the server information (the image of the Declaration of Independence, in the example above).
While the invention has been described with regard to a limited number of embodiments, it will be appreciated that many variations, modifications, and other applications of the invention may be made.

## Claims

1. A process of retrieving a specific image from a graphic database wherein the image retrieved is an element of a digital image ad said digital image being contained in a file; said element being made up of at least one pixel; said element forming less than the entire file; the process comprising:
(a) mapping of the element in the digital image;
(b) accessing the element within the file containing the digital image; and,
(c) selecting the element.

2. The process of claim 1, wherein the mapping of the element in the digital image is included in the file containing the digital image.

3. The process of claim 1, further comprising searching the graphic database for the specific image.

4. The process of claim 3, wherein the file containing the image includes information about the image.

5. The process of claim 4, wherein the information about the image is text contained in the image.

6. The process of claim 4, wherein the information about the image is administrative data about the image.

7. The process of claim 4, wherein the file containing the image features a header.

8. The process of claim 4, wherein the file containing the image is compatible with the TIF file format.

9. The process of claim 8, wherein the file containing the image features a header.

10. The process of claim 8, wherein the file containing the image is processed using OCR technology; wherein the file containing the image includes OCR information relating to characters which were not recognized by the OCR technology.

11. The process of claim 10, wherein the search utilizes an algorithm for matching the word being searched for, to a word containing characters not recognized by the OCR technology.

12. The process of claim 10, wherein the search utilizes the Adaptive Probability Pattern Search.

13. The process of claim 1, wherein the image is being retrieved over a network.

14. The process of claim 13, further comprising compressing the specific graphic image before retrieving it over the network.

15. The process of claim 13, wherein the file containing the graphic image is a compressed file; the process further comprising decompressing the file before searching for the graphic image.

16. The process of claim 15, further comprising compressing the graphic image before transmitting it over the network.

17. The process of claim 13, wherein the mapping of the element in the digital image is included in the file containing the digital image.

18. The process of claim 13, further comprising searching the graphic database for the specific image.

19. The process of claim 18, wherein the information about the image is text contained in the image.

20. The process of claim 18, wherein the information about the image is administrative data about the image.

21. The process of claim 18, wherein the file containing the image features a header.

22. The process of claim 18, wherein the file containing the image is compatible with the TIF file format.

23. The process of claim 22, wherein the file containing the image features a header.

24. The process of claim 22, wherein the file containing the image is processed using OCR technology; wherein the file containing the image includes OCR information relating to characters not recognized by the OCR technology.

25. The process of claim 24, wherein the search utilizes an algorithm for matching the word being searched for, to a word containing characters not recognized by the OCR technology.

26. The process of claim 24, wherein the search utilizes the Adaptive Probability Pattern Search.

27. A process of linking an element of a digital image to an item of data with related subject matter; the digital image being contained in a file; the element being made up of at least one pixel; the element forming less than the entire file; the process comprising:
(a) providing information related to the element and information related to said item of data; said information related to said item of data including location of said item of data;
(b) comparing said information related to the element with said information related to said item of data;
(c) accessing the location information of said item of data; and
(d) selecting said item of data.

28. The process of claim 27, wherein said information related to the item of data is contained in the file containing the digital image.

29. The process of claim 27, wherein said information related to the item of data is contained in the file containing the item of data.

30. The process of claim 29, wherein said item of data is an image file.

31. The process of claim 29, wherein said item of data is a element of a digital image; said digital image being contained in a file; said element being made up of at least one pixel; said element forming less than the entire file.
